# EUROPEAN PATENT APPLICATION

(11) **EP 1 424 173 A2**
(43) Date of publication of application: **02.06.2004**
(21) Application number: 03257492.3
(22) Date of filing: 27.11.2003
(51) Int. Cl.: B25J 9/16, G05B 19/4063

(54) **Device for graphically monitoring the operation state of a robot**

(30) Priority: 27.11.2002 JP 2002343712
(71) Applicant: FANUC LTD, Minamitsuru-gun, Yamanashi 401-0597 (JP)
(72) Inventor: Watanabe, Atsushi, Suginami-ku, Tokyo 168-0072 (JP); Nagatsuka, Yoshiharu, c/o FANUC Dai3virakaramatsu, Minamitsuru-gun, Yamanashi, 401-0511 (JP)
(74) Representative: Billington, Lawrence Emlyn

(57) **Abstract**

An operation state analyzer for a robot for use in analyzing a cause of an error or an abnormality in an operation of the robot using information of images of the robot in operation and information on an operation state of the robot. Conditions for starting and for terminating acquisition of the information are set. When the condition for starting the acquisition of information is fulfilled, the image data of the robot captured by a camera, a state of I/O signals, information on a motion of the robot are recorded at every predetermined period until the condition for terminating the acquisition of information is fulfilled. The recorded images of the robot are displayed in time series in the form of icons. When one of the icons is selected, internal information on the state of I/O signal, the motion of the robot, etc. associated with the selected icon is displayed. Also, velocities, accelerations and torques of the respective axes and a velocity, an acceleration and a torque of a tool center point of the robot are displayed. Since the images and the internal information of the robot acquired in operation are displayed in time series, analysis on a cause of an error or an abnormality in the operation of the robot is easily performed.

## Description

### BACKGROUND OF THE INVENTION

### 1. Field of the Invention

The present invention relates to a robot system, and more particularly to an operation state analyzer for analyzing an error or an abnormality in an operation of the robot system.

### 2. Description of Related Art

It requires numerous processes and thus a large amount of time and labor to analyze a cause of an error or an abnormality of a robot system. For analyzing the cause of the error or abnormality, it has been conventionally adopted to position watchers for watching an operation of the robot, or to record an image of a robot in operation by a video camera for use in analyzing a cause of an error or an abnormality of the operation of the robot system by playing back the recorded picture of the robot. In the case of a welding robot system, there is known a method in which a welding current as a physical amount in the welding robot system is measured and stored for every predetermined period and a change of the welding current is displayed on a display device of a computer for use in analyzing an operation state of the welding robot from a disclosure of JP 2002-172574A.

It is not efficient to position watchers for watching the operation state of the robot system since a cost for the watchers is incurred although operations to be performed are automated by the robot system. Further, it is necessary to record the image of the robot for a long time during the robot operation by the video camera and only limited information on the state of the robot operation is acquired and related data of the robot operation has not been utilized for the analysis.

### SUMMARY OF THE INVENTION

The present invention provides an operation state analyzer for a robot in which images of a robot in operation and various information on an operation state of the robot are recorded for use in analyzing a cause of an error or an abnormality in the operation of the robot.

An operation state analyzer for a robot of the present invention comprises: image acquiring means for acquiring image information representing images of the robot in operation; internal information acquiring means for acquiring internal information of the robot including information on a state of input/output signals and a state of motion of the robot; setting means for setting a starting condition for starting and a terminating condition for terminating the acquiring of the information; and recording means for recording the image information acquired by said image capturing means and the internal information acquired by said internal information acquiring means at every predetermined period to be associated with the time at which the information is acquired from when the starting condition is fulfilled until when the terminating condition is fulfilled.

The operation state analyzer may further comprise display means for displaying the images of the robot based on the recorded image information in time series on a display device; input means for allowing an input to select one of the displayed images of the robot, and the display means may display the recorded internal information associated with the selected one of the displayed images on the display device.

The operation state analyzer may further comprise calculation means for calculating one or more items of velocities, accelerations and torques of respective axes of the robot, and a velocity, an acceleration and a torque of a tool center point of the robot based on the recorded internal information and the recorded time at which the information is acquired for every image of the robot, and the display means may display the calculated items together with the recorded internal information associated with the selected one of the images of the robot on the display device. In this case, the display means may display an indication to the image of the robot in a state where at least one of the items exceeds a predetermined allowable value. Further, the display means may display the calculated items in time series as a graph.

The operation state analyzer may comprise means for displaying the state of the input/output signals based on the recorded internal information in time series as a graph.

The setting means may set the starting condition by designating a particular operation state of the robot, and sets the terminating condition by designating one of a particular operation state of the robot, elapsing time from a start of the acquiring of the information and the number of acquisitions of the information.

### BRIEF DESCRIPTION OF THE DRAWINGS

FIG. 1 is a schematic view of a robot system to which an operation state analyzer according to an embodiment of the present invention is applied;
FIG. 2 is a block diagram showing a connecting state among the operation state analyzer, a camera and a robot controller in the robot system shown in FIG. 1;
FIG. 3 is a flowchart of data acquiring processing to be executed by the operation state analyzer;
FIG. 4 is a diagram of a table storing acquired data;
FIG. 5 is a flowchart of analysis processing to be executed by the operation state analyzer;

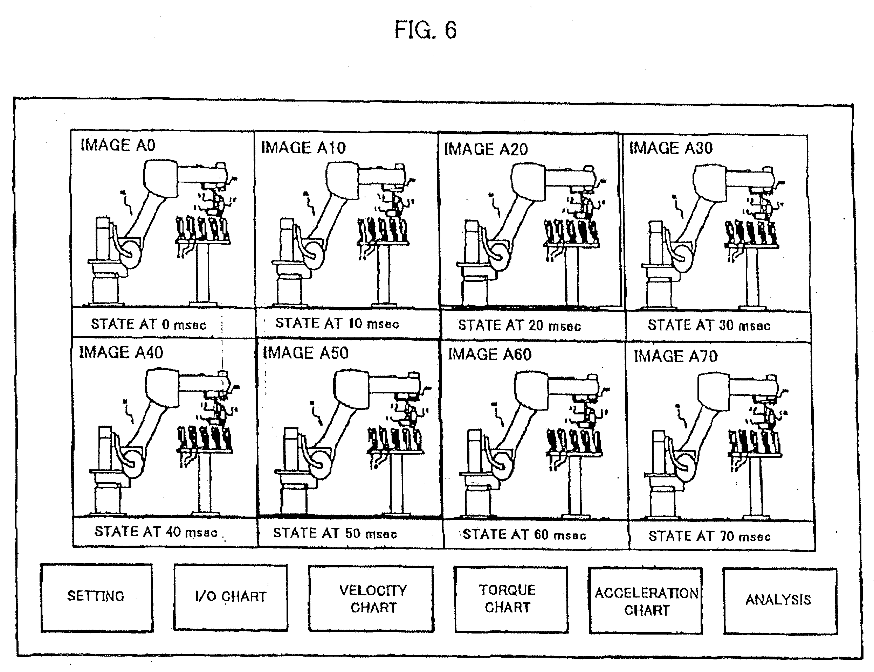

FIG. 6 is a diagram of a thumbnail display of the acquired images;
FIG. 7 is a diagram of a displayed graph showing a transition of state of the I/O signals;
FIG. 8 is a diagram of a displayed graph showing transitions of velocities of respective axes of the robot;
FIG. 9 is a diagram showing a displayed graph showing transitions of accelerations of respective axes of the robot;
FIG. 10 is a diagram showing a displayed graph showing transitions of torques of respective axes of the robot; and
FIG. 11 is a diagram showing a thumbnail display of the acquired images as icons with different colors for states where any of velocities and accelerations of respective axes and a tool center point exceeded an allowable value.

### DETAILED DESCRIPTION

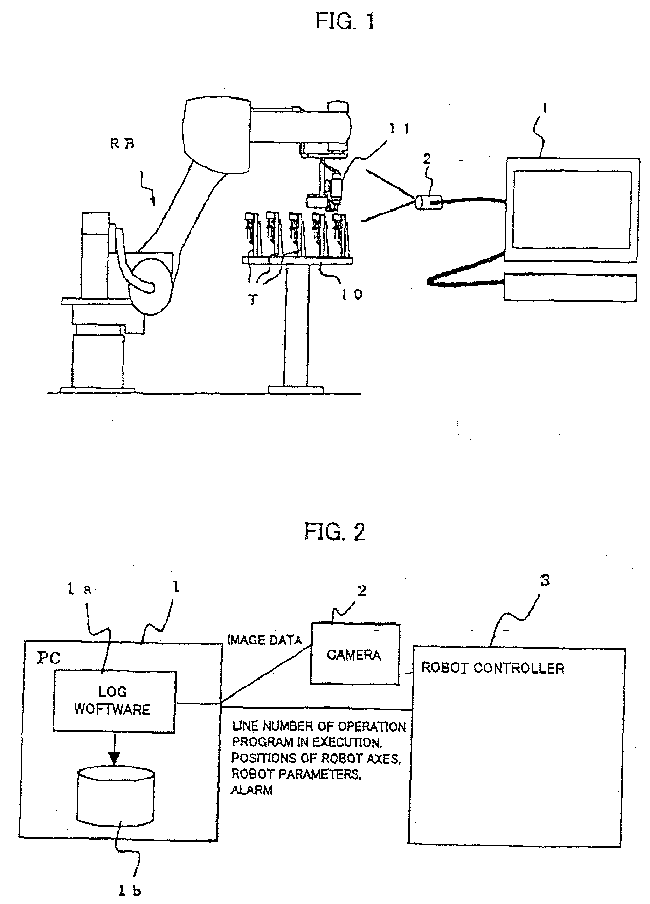

In an embodiment as shown in FIGS. 1 and 2, an operation state analyzer 1 is constituted by a personal computer and is connected with a CCD camera 2 as an image capturing device and a robot controller 3 for a robot RB through communication lines. In this embodiment, the robot RB performs an operation of taking out one of tools T of various types placed on a tool rest 10 by a tool holding device 11 attached to an distal end of an arm of the robot RB, returning the tool T onto the tool rest 10 after performing machining and taking out another tool on the tool rest 10 to perform another operation successively.

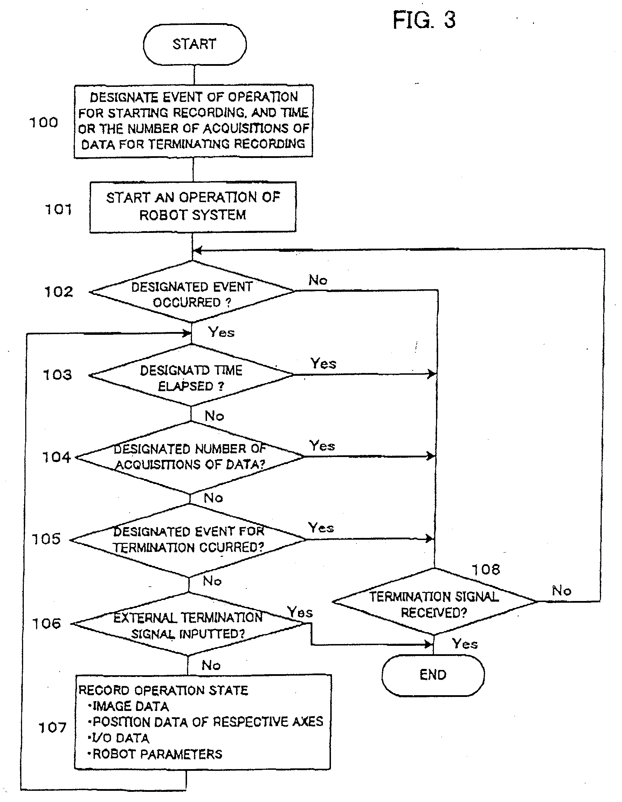

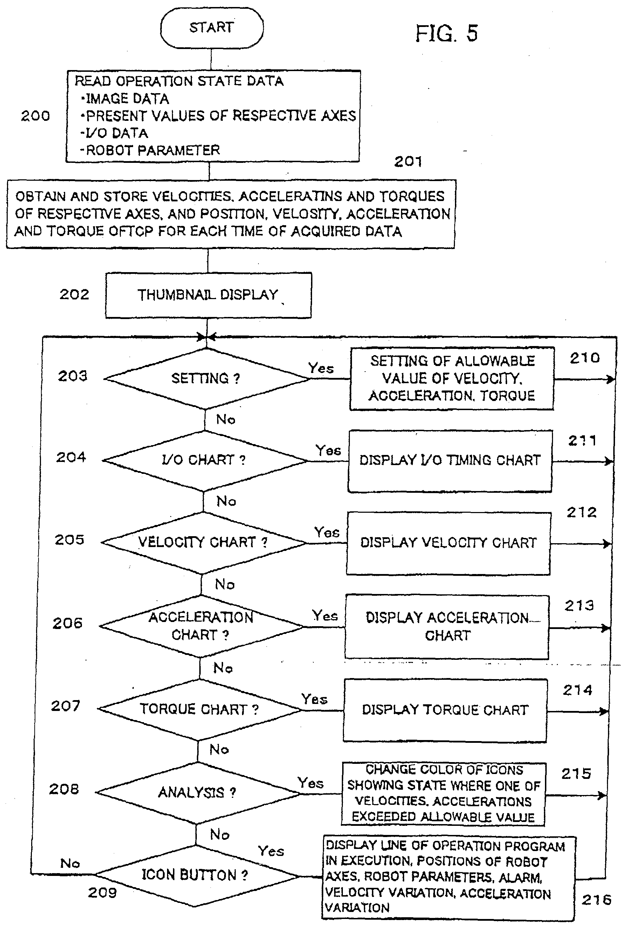

The operation state analyzer 1 is equipped with a log software 1a for executing data acquiring processing as shown by a flowchart of FIG. 3 and analysis processing as shown by a flowchart of FIG. 5.

First, an event of the robot operation at which recording of the robot operation is to be started. As the operation event, an appropriate event of the robot operation, such as issuance of an alarm, change of a designated I/O data, a change of value of a designated register exceeding a predetermined value is designated. In addition to the definition of the event for starting the recording, time, the number of times of recording or an operation evert at which the recording of the data is to be terminated is set and inputted (Step 100). Then, an operation of the robot system is started (Step 101).

The processor of the operation state analyzer 1 observes whether or not the designated operation event is occurred (Step 102), and whether or not an external command to terminate the record of data is inputted (Step 108).

If it is determined that the designated operation event has been occurred, the image data captured by the camera 2, internal information of the robot concerning state of the input/output signal and operation state of the robot is acquired from the robot controller 3. In this embodiment, as the internal information, a line number of an operation program in execution, present values of respective axes of the robot (positions and electric current values of driving motors for respective axes), robot parameters, and alarm information are acquired into the operation state analyzer 1.

If it is determined that the designated event has been occurred, it is further determined whether or not the set time period is elapsed from the start of the recording (Step 103), and if not, it is further determined whether or not the number of recordings of data has been reached the set number (Step 104), and if not, it is further determined whether or not the designated event for terminating the recording occurred (Step 105), and if not, it is further determined whether or not an external signal to terminate the recording is inputted (Step 106). If the external termination signal has not been inputted, the recording of state of the robot operation of Step 107 is started.

The recording of the operation state of the robot is performed by acquiring the image data captured by the CCD camera 2 from the CCD camera 2, a line number of the operation program presently in execution, present values of the respective axes of the robot (positions and driving current of the driving motors for respective axes), a present state of the I/O data inputted into the robot controller 3, state of the robot parameters, state of issuance of alarm including a kind of the alarm and storing these data in the memory 1b together with elapsing time from the start of the robot operation (or the present time).

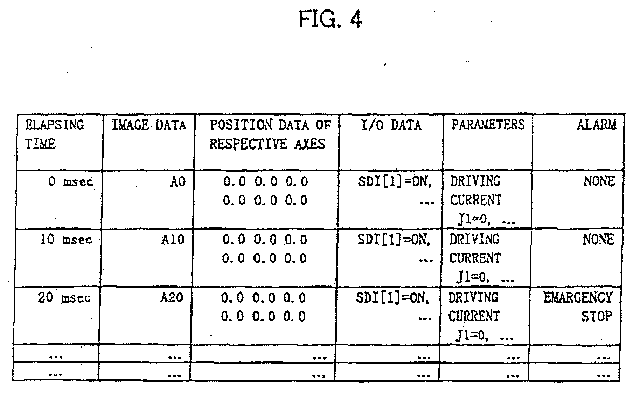

Subsequently, processing of Steps 103-107 is repeatedly executed at every processing period to record the state of the robot operation in time series in the memory 1b of the operation state analyzer 1. FIG. 4 shows an example of a data table DT storing the state of the robot operation in the memory 1b. In this example, the data on the robot operation are obtained at every 10 msec. The image data, the present values of the respective axes (positions and driving currents of the respective axes), the I/O data, the parameters and the alarm information are recorded periodically at every 10 msec.

After the robot operation data are thus recorded, when the operation state analyzer 1 is switch to an analyzing mode, the processor of the operation state analyzer 1 executes the processing as shown in FIG. 5.

First, the image data of the robot operation, the internal data of the robot system of the values (positions and the driving current values) of the respective axes of the robot, the I/O data, the robot parameters and the alarm information stored in the data table DT in the memory 1b are read (Step 200). Velocities, accelerations, torques of the respective axes and a position, a velocity and an acceleration of a tool center point (TCP) are obtained for each time of acquiring of the respective data (to be associated with the images of the robot) based on the internal information and the read elapsing time (or the time information of acquiring of the data) (Step 201). In particular, the velocities of the respective axes are obtained from the positions of the respective axes and the data acquisition time, and the accelerations of the respective axes are obtained by a change of the velocity between the respective data acquisition time. The torques of the respective axes are obtained from the driving current of the respective motors. The position of the TCP is obtained from the positions of the respective axes and the velocity of the TCP is obtained from the velocities of the respective axes. Further, the torque of the TCP is obtained from the positions, the velocities and the accelerations of the respective axes. Thus obtained data of the velocities, accelerations and the torques are stored to be associated with the respective data acquisition time (respective images of the robot).

The image data and the elapsing time (or respective time) information are displayed in the form of a list of icons on the display device of the operation state analyzer 1 in the order of acquiring the data in time series (Step 202).

Then, it is determined whether or not any one of buttons of "setting", "I/O chart", "velocity chart", "acceleration chart", torque chart" and "analysis chart" is selected (Steps 203-208).

If it is determined that the button "setting" is selected for setting allowable values of the velocities, the accelerations and the torques of the respective axes and the position, the velocity, the acceleration and the torque of the TCP for the analysis (Step 203), manually inputted values of the allowable values are set (Step 210).

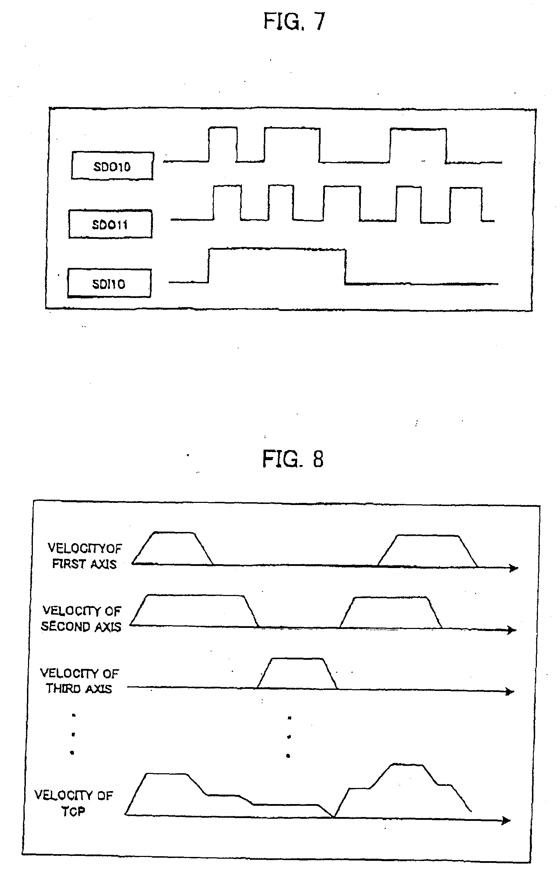

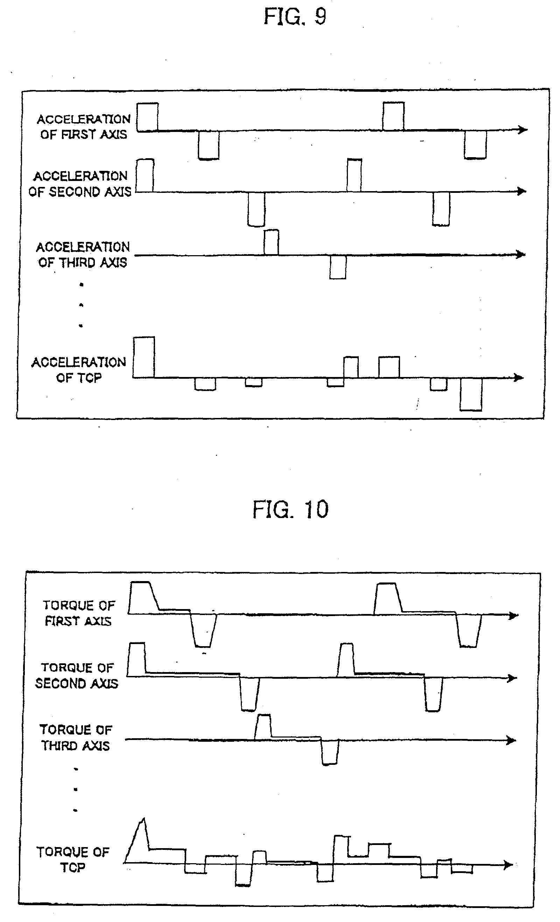

If it is determined that the button "I/O chart" is selected (Step 204), the historical state of the I/O signals is shown as a graph in time series, as shown in FIG. 7 (Step 211). If it is determined that the button "velocity chart" is selected (Step 205), the velocity data of the respective axes and the TCP obtained in Step 201 is displayed as a graph in time series as shown in FIG. 8 (Step 212). If it is determined that the button "acceleration chart" is selected (Step 206), the acceleration data of the respective axes and the TCP obtained at Step 201 are displayed as a graph in time series, as shown in FIG. 9 (Step 213). Further, if it is determined that the button "torque chart" is selected (Step 207), the torque data of the respective axes and the TCP are displayed as a graph in time series, as shown in FIG. 10 (Step 214).

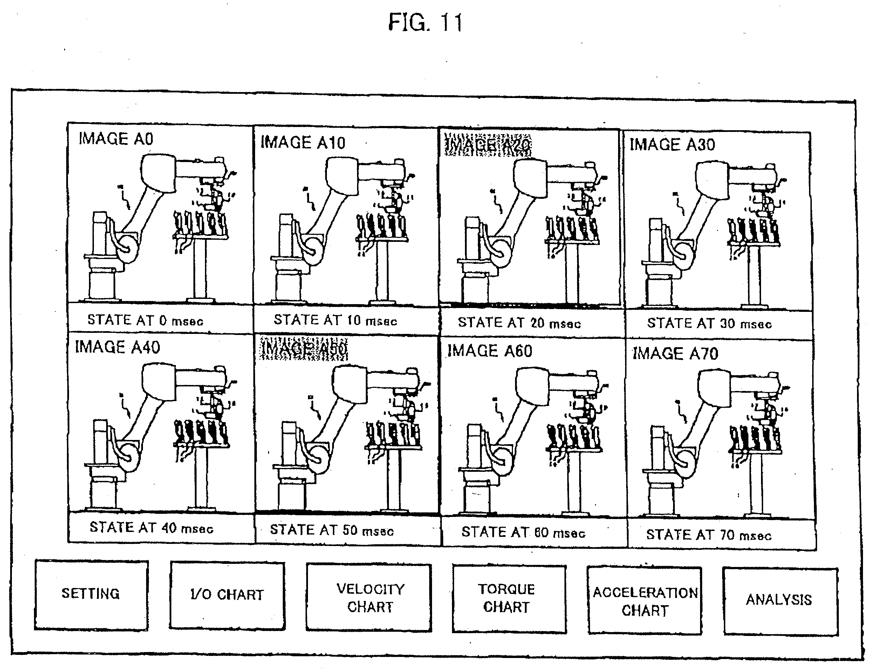

If it is determined that the button "analysis" is selected (Step 208), a color of any icon which shows a state where the velocity of the acceleration exceeds the allowable value is changed as shown in FIG. 11 (Step 215). In the example of FIG. 11, colors of the icons indicating the operation states of the robot at elapsing time 30msec and 60 msec are changed. In FIG. 11, the colors of the whole icons are changed actually in the display device, with the indication of "image A30" and "image A60" of the icons changing the colors thereof in the display device are screened.

Further, if it is determined that one of the icons is selected (Step 209), the line number of the operation program in execution at the time of acquiring the data, the positions of the respective axes of the robot, the I/O data, the robot parameters, the state of alarm, state of velocity change, the state of acceleration change, the state of torque change are displayed (Step 216).

In the above-described manner, the processing of Steps 203-209 is repeatedly executed and if it is determined that any one of the buttons and icons is selected, the data indicating the historical data of the robot operation are displayed. The historical data of the robot operation including images of the robot and signals thereof are displayed to contribute the analysis of the error or malfunction of the robot to easily recovery from such state.

According to the present invention, it is not necessary to position watchers aside the robot until an error of the robot system occurs again to reduce cost for watchers. Since the cause of the error is automatically analyzed based on the recorded data, time required for the analysis is shortened to make a recovery from the error in a short time.

## Claims

1. An operation state analyzer for analyzing an operation state of a robot, comprising:
image capturing means for acquiring image information representing images of the robot in operation;
internal information acquiring means for acquiring internal information of the robot including information on a state of input/output signals and a state of motion of the robot;
setting means for setting a starting condition for starting and a terminating condition for terminating the acquiring of the information; and
recording means for recording the image information acquired by said image capturing means and the internal information acquired by said internal information acquiring means at every predetermined period to be associated with the time at which the information is acquired from when the starting condition is fulfilled until when the terminating condition is fulfilled.

2. An operation state analyzer according to claim 1, further comprising display means for displaying the images of the robot based on the recorded image information in time series on a display device; input means for allowing an input to select one of the displayed images of the robot, wherein said display means displays the recorded internal information associated with the selected one of the displayed images on the display device.

3. An operation state analyzer according to claim 2, further comprising calculation means for calculating one or more items of velocities, accelerations and torques of respective axes of the robot, and a velocity, an acceleration and a torque of a tool center point of the robot based on the recorded internal information and the recorded time at which the information is acquired for every image of the robot,
wherein said display means displays the calculated items together with the recorded internal information associated with the selected one of the images of the robot on the display device.

4. An operation state analyzer according to claim 3, wherein said display means displays an indication to the image of the robot in a state where at least one of the items exceeds a predetermined allowable value.

5. An operation state analyzer according to claim 3, wherein said display means displays the calculated items in time series as a graph.

6. An operation state analyzer according to any one of claims 1 to 4, further comprising means for displaying the state of the input/output signals based on the recorded internal information in time series as a graph.

7. An operation state analyzer according to any one of claims 1 to 6, said setting means sets the starting condition by designating a particular operation state of the robot, and sets the terminating condition by designating one of a particular operation state of the robot, elapsing time from a start of the acquiring of the information and the number of acquisitions of the information.
